(19) Europäisches Patentamt
European Patent Office
Office européen des brevets

(11) EP 4 410 888 A1

(12) **EUROPEAN PATENT APPLICATION**
published in accordance with Art. 153(4) EPC

(43) Date of publication:
**07.08.2024 Bulletin 2024/32**

(21) Application number: **22876356.1**

(22) Date of filing: **28.09.2022**

(51) International Patent Classification (IPC):
***C08L 55/02*** *(2006.01)* ***C08G 81/02*** *(2006.01)*
***C08L 29/04*** *(2006.01)*

(52) Cooperative Patent Classification (CPC):
**C08G 81/02; C08L 29/04; C08L 55/02**

(86) International application number:
**PCT/JP2022/036215**

(87) International publication number:
**WO 2023/054490 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159445**

(71) Applicant: **Mitsubishi Chemical Corporation**
**Chiyoda-ku**
**Tokyo 100-8251 (JP)**

(72) Inventor: **KOBAYASHI, Yuuta**
**Tokyo 100-8251 (JP)**

(74) Representative: **Vossius & Partner**
**Patentanwälte Rechtsanwälte mbB**
**Siebertstrasse 3**
**81675 München (DE)**

(54) **RESIN COMPOSITION, MOLDED ARTICLE, MODIFIER FOR ABS RESIN, METHOD FOR PRODUCING RESIN COMPOSITION, AND METHOD FOR MODIFYING ABS RESIN**

(57) As a resin composition that can improve oil resistance of a molded article, provided is a resin composition including: an ABS resin (A); and an ethylene-vinyl alcohol resin (B), wherein the ethylene-vinyl alcohol resin (B) includes a modified ethylene-vinyl alcohol resin (B1) having a structural unit represented by chemical formula (1), wherein X represents an organic chain having a heteroatom; and n represents a positive integer.

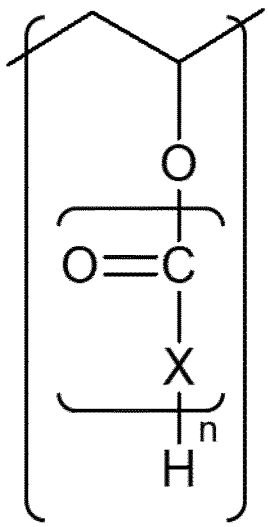

...(1)

EP 4 410 888 A1

## Description

### TECHNICAL FIELD

The present disclosure relates to a resin composition containing an ABS resin and an ethylene-vinyl alcohol resin, etc. The present disclosure specifically relates to a resin composition to form a molded article having excellent oil resistance, the molded article, a method for manufacturing a resin composition, and a modifier for an ABS resin and a method for modifying an ABS resin used therefor.

### BACKGROUND ART

Since ABS resins have excellent processability and mechanical properties such as impact resistance, the ABS resins have been conventionally and commonly used in industrial fields represented by the automobile industry.
Needs of the ABS resins have been spread to use under various environments in recent years, and there have been various proposals on contrivances for further improving properties of a molded article composed of the ABS resin.
For example, for a purpose of improving properties of the molded article composed of the ABS resin, in order to obtain a molded article having an excellent antistatic property and transparency, proposed is art of blending an antistatic agent composed of a polyether ester amide and an acid-modified methacrylate-based polymer with the ABS resin (see PTL1).

### RELATED ART DOCUMENT

### PATENT DOCUMENT

PTL 1: JP-A-2015-196809

### SUMMARY

### PROBLEM TO BE SOLVED BY THE DISCLOSURE

As noted above, the ABS resins, which have excellent mechanical properties and commonly used in the industrial fields, have a problem of limited usage due to its poor oil resistance.
The present disclosure has been made in view of the above circumstances. The present disclosure provides: a resin composition that can improve oil resistance of a molded article; the molded article; a method for manufacturing a resin composition; and a modifier for an ABS resin and a method for modifying an ABS resin used therefor.

### MEANS FOR SOLVING THE PROBLEMS

The present inventor has earnestly studied a modifying method to improve oil resistance of a molded article of a resin composition containing an ABS resin, and consequently found that the oil resistance of the molded article is improved by blending a specific modified ethylene-vinyl alcohol resin with the ABS resin.
In addition, the present inventor has found that the oil resistance of the molded article is improved by setting a mass change rate in an immersion test of a resin composition containing an ABS resin and an ethylene-vinyl alcohol resin within a specific range.
Furthermore, the present inventor has found that the oil resistance is improved by setting a contact angle of a molded article formed from a resin composition containing an ABS resin and an ethylene-vinyl alcohol resin within a specific range.
Specifically, the present disclosure provides the following [i] to [xii],

[i] A resin composition, comprising: an ABS resin (A); and an ethylene-vinyl alcohol resin (B), wherein the ethylene-vinyl alcohol resin (B) comprises a modified ethylene-vinyl alcohol resin (B1) having a structural unit represented by the following chemical formula (1),

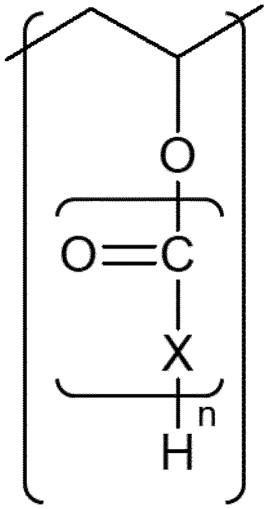

...(1)

wherein X represents an organic chain having a heteroatom; and "n" represents a positive integer.

[ii] A resin composition, comprising: an ABS resin (A); and an ethylene-vinyl alcohol resin (B), wherein the resin composition has a mass change rate in the following immersion test of not more than 0.45%,

Immersion Test

a mass ($W_1$) of a specimen of the resin composition with 80 mm in length × 10 mm in width × 4 mm in thickness is measured; then, the specimen is immersed in a test oil (Daphne Super Gear Oil 150, available from Idemitsu Kosan Co., Ltd.) at 23°C for 168 hours; then, the test oil is wiped off; and a mass ($W_2$) of the specimen is measured to determine the mass change rate (%) with the following formula,

$$\text{Mass change rate (\%)} = (W_2 - W_1)/W_1 \times 100.$$

[iii] The resin composition according to [i] or [ii], wherein the ethylene-vinyl alcohol resin (B) is contained by 1 to 70 parts by mass relative to 100 parts by mass of a total of the ABS resin (A) and the ethylene-vinyl alcohol resin (B).

[iv] The resin composition according to [i] or [ii], wherein the ethylene-vinyl alcohol resin (B) is contained by 1 to 40 parts by mass relative to 100 parts by mass of a total of the ABS resin (A) and the ethylene-vinyl alcohol resin (B).

[v] The resin composition according to any of [i], [iii], and [iv] wherein the modified ethylene-vinyl alcohol resin (B1) having the structural unit represented by the chemical formula (1) has a modification rate of 0.1 to 30 mol%.

[vi] The resin composition according to any of [i] and [iii] to [v], wherein the modified ethylene-vinyl alcohol resin (B1) having the structural unit represented by the chemical formula (1) is a ring-opened polymer of a lactone ring having 3 to 10 carbon atoms constituting the ring.

[vii] A molded article, formed with the resin composition according to any of [i] to [vi].

[viii] The molded article according to [vii], wherein the molded article is a sheet or a film.

[ix] A modifier for an ABS resin, the modifier comprising a modified ethylene-vinyl alcohol resin (B1) having a structural unit represented by the following chemical formula (1),

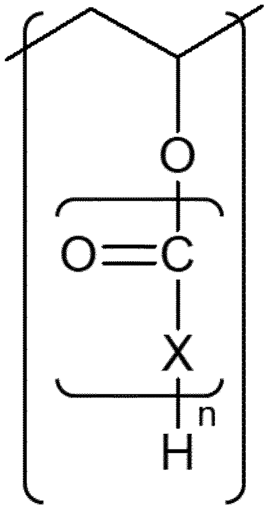

...(1)

wherein X represents an organic chain having a heteroatom; and "n" represents a positive integer.

[x] A method for manufacturing a resin composition, the method comprising a step of blending a modified ethylene-vinyl alcohol resin (B1) having a structural unit represented by the following chemical formula (1) with an ABS resin (A),

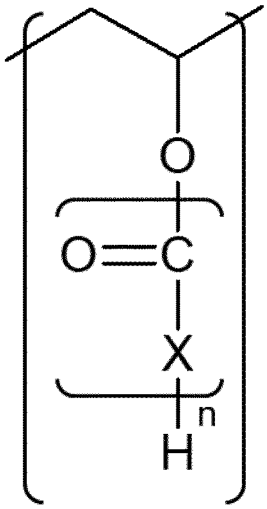

...(1)

wherein X represents an organic chain having a heteroatom; and "n" represents a positive integer.

[xi] A method for modifying an ABS resin, the method comprising a step of blending a modified ethylene-vinyl alcohol resin having a structural unit represented by the following chemical formula (1) with an ABS resin (A),

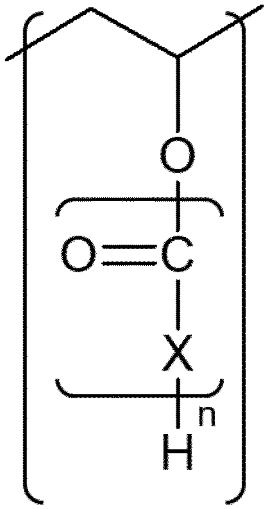
...(1)

wherein X represents an organic chain having a heteroatom; and "n" represents a positive integer.

[xii] A molded article formed from a resin composition comprising: an ABS resin (A); and an ethylene-vinyl alcohol resin (B), wherein the molded article has a contact angle of less than 85°.

EFFECTS OF THE DISCLOSURE

The present disclosure can provide a resin composition having improved oil resistance and a molded article containing the resin composition.

The modifier for an ABS resin and method for modifying an ABS resin of the present disclosure can provide an ABS resin having the above excellent properties by blending the modifier with an ABS resin.

EMBODIMENTS OF THE DISCLOSURE

Hereinafter, embodiments of the present disclosure will be specifically described, but the present disclosure is not limited to the description.

In the embodiment of the present disclosure, the expression "X to Y," wherein X and Y are given numbers, encompasses a meaning of "preferably more than X" or "preferably less than Y" unless otherwise specified, in addition to a meaning of "not less than X and not more than Y"

The expression "not less than X," wherein X is a given number, or "not more than Y", wherein Y is a given number, is intended to encompass "preferably more than X" or "preferably less than Y".

Further, the expression "X and/or Y", wherein X and Y are each given form, means at least one of X and Y, and to include the following three meanings of: only X; only Y; and X and Y.

In the embodiment of the present disclosure, "main component" means a component significantly affects properties of a material thereof, and a content of the component is typically not less than 50 mass%, preferably not less than 60 mass%, more preferably not less than 70 mass%, and particularly preferably not less than 80 mass% in an entirety of the material.

<Resin Composition According to First Embodiment>

A resin composition according to the first embodiment of the present disclosure is a resin composition comprising an ABS resin (A) and an ethylene-vinyl alcohol resin [hereinafter, referred to as "EVOH"] (B), wherein the EVOH (B) comprises a modified EVOH (B1) having a structural unit represented by the following chemical formula (1).

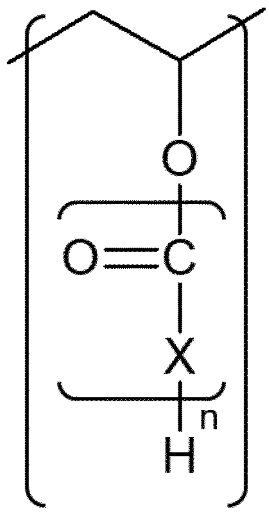

...(1)

In the chemical formula (1), X represents an organic chain having a heteroatom; and "n" represents a positive integer.

Hereinafter, these will be sequentially described in each section.

ABS Resin (A)

The ABS resin (A) used in the present disclosure is not particularly limited. Any ABS resins, which contain three components of acrylonitrile, butadiene, and styrene, may be used, and commercially available products may also be used. Examples of the ABS resin (A) include: butadiene latex grafted with acrylonitrile and styrene; a blend of nitrile rubber (NBR), which is an acrylonitrile-butadiene copolymer, and an acrylonitrile-styrene copolymer; a copolymer obtained by block- or graft-polymerizing one or more monomers of an aromatic vinyl monomer and a vinyl cyanide monomer with diene rubber; and a blend with the copolymer. The diene rubber here refers to polybutadiene, polyisoprene, acrylonitrile-butadiene copolymer, styrene-butadiene copolymer, etc. Examples of the aromatic vinyl monomer include styrene, $\alpha$-methylstyrene, and alkyl-substituted styrenes. Examples of the vinyl cyanide monomer include acrylonitrile, methacrylonitrile, and halogen-substituted acrylonitrile. Specific examples of the aforementioned copolymer and the blend with the copolymer include acrylonitrile-butadiene-styrene ternary copolymer and polymer alloy of acrylonitrile-styrene binary copolymer with polybutadiene.

A composition ratio between the three monomers to constitute the ABS resin (A) is not particularly limited.

EVOH (B)

Next, the EVOH (B) used together with the ABS resin (A) will be described.

The EVOH (B) is typically a resin obtained by saponifying an ethylene-vinyl ester copolymer, which is a copolymer of ethylene and a vinyl ester monomer. The EVOH (B) is a water-insoluble thermoplastic resin.

Ethylene and the vinyl ester monomer may be polymerized by using any known polymerization methods such as, for example, solution polymerization, suspension polymerization, and emulsion polymerization, and solution polymerization with methanol as a solvent is typically used. The saponification of the obtained ethylene-vinyl ester copolymer may also be performed by a known method.

The EVOH (B) manufactured as above mainly has a structural unit derived from ethylene and a vinyl alcohol structural unit, and typically has a small amount of a vinyl ester structural unit, which is not saponified to remain.

As the vinyl ester monomer, vinyl acetate is representatively used in terms of commercial availability and good treatment efficiency of an impurity in manufacture. Examples of other vinyl ester monomers include: aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters, such as vinyl benzoate. An aliphatic vinyl ester having typically 3 to 30 carbon atoms, preferably 4 to 10 carbon atoms, and particularly preferably 4 to 7 carbon atoms may be used. These may be used alone or in combination.

A content of the ethylene structural unit in the EVOH (B) can be regulated by a pressure of ethylene in copolymerizing the vinyl ester monomer and ethylene, and is typically 20 to 60 mol%, preferably 25 to 50 mol%, and particularly preferably 30 to 45 mol%. If the content is excessively low, melting moldability tends to be deteriorated. In contrast, if the content is excessively high, a gas barrier property tends to be deteriorated.

This content of the ethylene structural unit can be measured in accordance with ISO14663.

A saponification degree of the vinyl ester component in the EVOH (B) can be regulated by an amount of a saponification catalyst (an alkali catalyst such as sodium hydroxide is typically used), temperature, time, etc. in saponifying the ethylene-vinyl ester copolymer. The saponification degree is typically 90 to 100 mol%, preferably 95 to 100 mol%, and particularly preferably 99 to 100 mol%. If this saponification degree is excessively low, a gas barrier property, thermal stability, moisture stability, etc. tend to be deteriorated.

This saponification degree of the EVOH (B) can be measured in accordance with JIS K6726 (EVOH is used as a uniformly dissolved solution of a water/methanol solvent).

The EVOH (B) may further has a structural unit derived from following comonomers within a range not inhibiting the effect of the present disclosure (for example, not more than 10 mol% of EVOH).

Examples of the comonomer include: olefins, such as propylene, 1-butene, and isobutene, hydroxy-group-containing α-olefins, such as 3-buten-1-ol, 3-butene-1,2-diol, 4-penten-1-ol, and 5-hexene-1,2-diol, and derivatives thereof, such as ester and acylated compound; hydroxyalkylvinylidenes, such as 2-methylenepropane-1,3-diol and 3-methylenepentane-1,5-diol; hydroxyalkylvinylidene diacetates, such as 1,3-diacetoxy-2-methylenepropane, 1,3-dipropionyloxy-2-methylenepropane, and 1,3-dibutylyloxy-2-methylenepropane; unsaturated acids, such as acrylic acid, methacrylic acid, crotonic acid, phthalic acid (anhydride), maleic acid (anhydride), and itaconic acid (anhydride), salt thereof, or mono- or dialkylester having an alkyl group having 1 to 18 carbon atoms; acrylamides, such as acrylamide, N-alkylacrylamide having an alkyl group having 1 to 18 carbon atoms, N,N-dimethylacrylamide, 2-acrylamide propanesulfonic acid or salt thereof, acrylamide propyldimethylamine or acid salt thereof or quaternary salt thereof; methacrylamides, such as methacrylamide, N-alkylmethacrylamide having the alkyl group having 1 to 18 carbon atoms, N,N-dimethylmethacrylamide, 2-methacrylamide propanesulfonic acid or acid salt thereof, methacrylamide propyldimethylamine or salt thereof or quaternary salt thereof; N-vinylamides, such as N-vinylpyrrolidone, N-vinylformamide, and N-vinylacetamide; vinyl cyanides, such as acrylonitrile and methacrylonitrile; vinyl ethers, such as alkyl vinyl ether, hydroxyalkyl vinyl ether, and alkoxyalkyl vinyl ether, which have an alkyl group having 1 to 18 carbon atoms; vinyl halide compounds, such as vinyl chloride, vinylidene chloride, vinyl fluoride, vinylidene fluoride, and vinyl bromide; vinylsilanes, such as trimethoxyvinylsilane; allyl acetate, allyl halide compounds, such as allyl chloride; allyl alcohols, such as allyl alcohol and dimethoxyallyl alcohol; and comonomers such as trimethyl-(3-acrylamide-3-dimethylpropyl)-ammonium chloride and acrylamide-2-methylpropanesulfonic acid.

These may be used alone or in combination.

Specifically, EVOH having a primary hydroxy group at a side chain is preferable in terms of good secondary moldability such as a stretching treatment and vacuum or pressure molding. EVOH having a 1 ,2-diol structure at a side chain is particularly preferable.

The EVOH (B) used in the present disclosure may be a "post-modified" product such as urethanizaiton, acetalization, cyanoethylation, oxyalkylation, and acylation.

The EVOH (B) used in the present disclosure may be a mixture with another different EVOH, and examples of the other EVOH include one having a different saponification degree, one having a different polymerization degree, and one having a different copolymerized component.

Modified EVOH (B1)

The resin composition according to the first embodiment of the present disclosure comprises the modified EVOH (B1) having the structural unit represented by the following chemical formula (1) as the EVOH (B). Although the EVOH (B) may contain EVOH other than the modified EVOH (B1), the EVOH (B) is preferably the modified EVOH (B1) in terms of the effect of the present disclosure. Hereinafter, the modified EVOH (B1) will be descried.

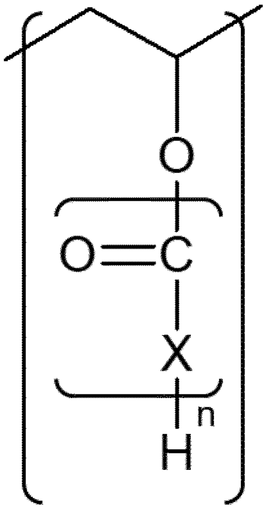

...(1)

In the chemical formula (1), X represents an organic chain having a heteroatom; and "n" represents a positive integer.

The modified EVOH (B1) used in the first embodiment of the present disclosure has the structural unit represented by the chemical formula (1) in a main chain.

In the chemical formula (1), X represents an organic chain having a heteroatom. Examples of the heteroatom include oxygen atom, nitrogen atom, sulfur atom, phosphorus atom, and silicon atom. Among these, the heteroatom is preferably oxygen atom, nitrogen atom, or sulfur atom, and particularly preferably oxygen atom from the industrial viewpoint.

From the viewpoint of manufacture, X is preferably an organic chain having: a hydrocarbon chain from the carbonyl group and optionally having a substituent; and a heteroatom at a repeating terminal and optionally having a substituent. As long as X has the heteroatom from the carbonyl group at at least a repeating unit, X may have another heteroatom.

When the X represents the organic chain having: the hydrocarbon chain optionally having a substituent; and the heteroatom at the repeating terminal and optionally having a substituent, and when the hydrocarbon chain optionally having a substituent is represented by $R_x$ and the heteroatom at the repeating terminal and optionally having a substituent is represented by Z, the modified EVOH (B1) is represented by the following chemical formula (2).

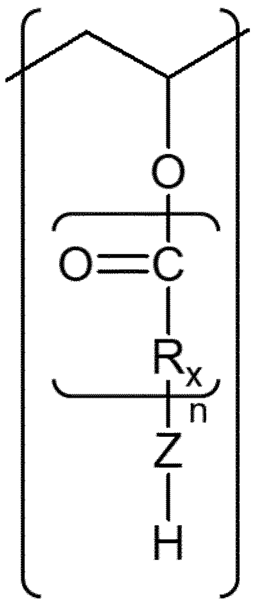

...(2)

In the chemical formula (2), $R_x$ represents a hydrocarbon chain optionally having a substituent; Z represents a heteroatom optionally having a substituent; and "n" represents a positive integer.

In the chemical formula (2), examples of the repeating unit include - $CO-R_x-O-$ when Z represents an oxygen atom, examples of the repeating unit include $-CO-R_x-NH-$ and $-CO-R_x-NR^3-$ when Z represents a nitrogen atom, and examples of the repeating unit include $-CO-R_x-S-$ when Z represents a sulfur atom.

Examples of the hydrocarbon and the substituent that the heteroatom optionally has include: alkyl groups, such as methyl group and ethyl group; aryl groups, such as aromatic ring; and acyl groups, such as acetyl group. That is, $R^3$ in the $-CO-R_x-NR^3-$ represents alkyl groups, such as methyl group and ethyl group, aryl groups, such as aromatic ring, or acyl groups, such as acetyl group.

Among these, the repeating unit is preferably $-CO-R_x-O-$, $CO-R_x-NH-$, or $-CO-R_x-S-$, and Z particularly preferably represents an oxygen atom from the viewpoint of improvement of the gas barrier property. Specifically, an aliphatic polyester unit represented by the following chemical formula (3) is preferably contained.

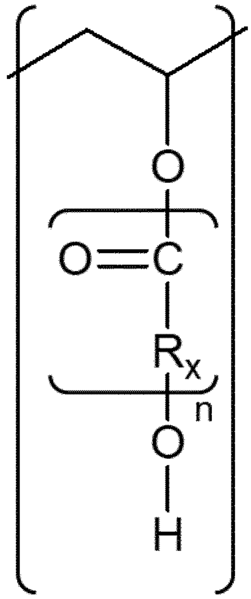
...(3)

In the chemical formula (3), $R_x$ represents a hydrocarbon chain optionally having a substituent; and "n" represents a positive integer.

The hydrocarbon chain $R_x$ in the chemical formulae (2) and (3) is preferably a linear or branched chain having 1 to 10 carbon atoms. Examples of the linear or branched hydrocarbon chain having 1 to 10 carbon atoms include methylene group ($-CH_2-$), methyne group ($-CHR-$), quaternary carbon having no hydrogen atom ($-CR^1R^2-$), propylene group, isopropylene group, butylene group, isobutylene group, and phenylene group. R, $R^1$, and $R^2$ in the methyne group and the quaternary carbon represent alkyl groups, such as methyl group and ethyl group, or aryl groups, such as aromatic ring. Among these, the hydrocarbon chain is more preferably a linear or branched alkyl chain having 2 to 8 carbon atoms, and further preferably a liner or branched alkyl chain having 3 to 7 carbon atoms. Among these, the hydrocarbon chain is preferably a linear hydrocarbon chain, further preferably a linear alkyl chain having 2 to 8 carbon atoms, and particularly preferably a linear alkyl group having 3 to 7 carbon atoms from the viewpoint of improvement of storage stability and process stability of the resin.

In the chemical formulae (1) to (3), "n" represents a positive integer. "n" preferably represents an integer of 1 to 20, and more preferably an integer of 1 to 10. Since an excessively large "n" tends to deteriorate the barrier property, "n" preferably represents an integer of not more than 20.

When "n" represents not less than 2 in the chemical formula (1), the plurality of X may be same as or different from each other, but are preferably same from the viewpoint of the barrier property. When "n" represents not less than 2 in the chemical formula (2), the plurality of $R_x$ and Z may be each same as or different from each other, but are preferably same from the viewpoint of the barrier property. When "n" represents not less than 2 in the chemical formula (3), the plurality of $R_x$ may be same as or different from each other, but are preferably same from the viewpoint of the barrier property.

In the modified EVOH (B1) in the resin composition according to the first embodiment of the present disclosure, an average value of "n" in the chemical formulae (1) to (3) (that is, the average value may be referred to as "average chain length of the grafted chain") is each preferably within a range of 1 to 10, more preferably within a range of 1 to 5, further preferably within a range of 1 to 2, and particularly preferably within a range of 1 to 1.5. Since an excessively large average value of "n" tends to increase variation of the chain lengths of the grafted chain and consequently deteriorate

the gas barrier property, "n" preferably represents not more than 10.

The structural unit represented by the chemical formulae (1) to (3) can be identified by common organochemical techniques such as, for example, nuclear magnetic resonance spectrometry (NMR), infrared spectrometry, and mass spectrometry.

The average chain length of the grafted chain in the chemical formulae (1) to (3) in the modified EVOH (B1) of the present embodiment can be calculated from measurement results by $^1$H-NMR.

Method for Manufacturing Modified EVOH (B1)

The modified EVOH (B1) having the structural unit represented by the chemical formula (1) in a main chain can be obtained by, for example, a graft reaction in which EVOH and a compound having a hetero-functional group are heated and stirred in a state of melted EVOH in a stirring-vessel-type manufacturing apparatus having a stirring blade, or using an extruder or a shearing-molding processing machine equipped with a returning-type screw.

The repeating unit composed of the chemical formula (1) contained in a main chain of the modified EVOH (B1), namely a side-chain-grafted structure by the graft reaction, is formed with the hydroxy group of the EVOH as an initiation terminal.

Compound Having Hetero-Functional Group

The hetero-functional group refers to a functional group having a heteroatom, and examples of the heteroatom include oxygen atom, nitrogen atom, sulfur atom, phosphorus atom, and silicon atom. Specific examples of the functional group having a heteroatom include ester group, carboxylic acid group, acyl group, thioester group, amide group, carbonate group, carbamate group, thiocarbamate group, carbamide group, N-acyl group, and N,N'-diacyl group.

Examples of the compound having the hetero-functional group include cyclic compound having the hetero-functional group, carboxylic acid compound, carbonate compound, carbamate compound, thiocarbamate compound, diacyl compound, triacyl compound, and derivative thereof. Among these, cyclic compound having the hetero-functional group is preferable.

Cyclic Compound Having Hetero-Functional Group

The cyclic compound having the hetero-functional group is preferably a heterocyclic compound having not less than 2 carbon atoms. Examples of the cyclic compound having the hetero-functional group include: cyclic esters, such as lactones; cyclic amides, such as lactams; cyclic carbonates, such as ethylene carbonate and propylene carbonate; cyclic thioesters, such as thietan-2-one, 3,3-dimethylthietan-2-one, 4-methylthietan-2-one, 3-methylthietan-2-one, 3-ethylthietan-2-one, and 3-methyl-3-ethylthietan-2-one; cyclic carbamates, such as ethylene carbamate; imide compounds, such as phenyl phthalimide and cyclohexane dicarboxyimide; cyclic urea derivatives, such as N,N'-dimethylpropyleneurea and 1,3-dimethyl-2-imidazolidinone; and cyclic N,N'-diacyl compounds, such as N-acyl-substituted caprolactam. Among these, cyclic esters are preferable, and lactones are more preferable.

The lactones are preferably lactones that form an aliphatic polyester by ring-opening polymerization and that have 3 to 10 carbon atoms constituting the ring. Such lactones are represented by the following general formula (4) when having no substituent.

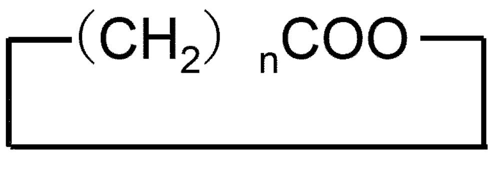

...(4)

In the formula (4), "n" represents an integer of 2 to 9, and preferably 4 to 5. Any of carbon atoms in the alkylene chain $-(CH_2)_n-$ in the formula (4) may have at least one substituent such as lower alkyl group or lower alkoxy group having approximately 1 to 8 carbon atoms, cycloalkyl group, phenyl group, and aralkyl group.

Specific examples of such lactones include β-propiolactones, γ-butyrolactones, ε-caprolactones, and δ-valerolactones.

Examples of the β-propiolactones include β-propiolactone and dimethylpropiolactone.

Examples of the γ-butyrolactones include butyrolactone, γ-valerolactone, γ-caprolactone, γ-caprylolactone, γ-laurolactone, γ-palmitolactone, γ-stearolactone, crotonolactone, α-angelicalactone, and β-angelicalactone.

Examples of the ε-caprolactones include: ε-caprolactone; monoalkyl-ε-caprolactones, such as monomethyl-ε-caprolactone, monoethyl-ε-caprolactone, monodecyl-ε-caprolactone, and monopropyl-ε-caprolactone; dialkyl-ε-caprolactone substituted with two alkyl groups at carbon atoms other than the ε-position; trialkyl-ε-caprolactone substituted with three alkyl groups at carbon atoms other than the ε-position; alkoxy-ε-caprolactones, such as ethoxy-ε-caprolactone; cycloalkyllactones, such as cyclohexyl-ε-caprolactone; aralkyl-ε-caprolactones, such as benzyl-ε-caprolactone; and aryl-ε-caprolactones, such as phenyl-ε-caprolactone.

Examples of the 5-valerolactones include 5-valerolactone, 3-methyl-5-valerolactone, 3,3-dimethyl-5-valerolactone, 2-methyl-5-valerolactone, and 3-ethyl-5-valerolactone.

These lactones may be used alone or in combination.

Among these, ε-caprolactones and δ-valerolactones are particularly preferable, and in terms of inexpensive and easy availability, ε-caprolactone is still particularly preferable.

Carboxylic Acid Compound

Examples of the carboxylic acid compound include linear carboxylate ester, linear carboxylate thioester, linear carboxamide, acyl halide of carboxylic acid, or anhydride. Among these, linear carboxylate ester is preferable.

Carbonate Compound

Examples of the carbonate compound include various dialkyl carbonates, diaryl carbonates, and aryl alkyl carbonates.

Carbamate Compound

Examples of the carbamate compound include methylcarbamate and ethylcarbamate.

Thiocarbamate Compound

Examples of the thiocarbamate compound include derivatives of dimethylamino-S-arylthiocarbamate, etc.

Diacyl Compound

Examples of the diacyl compound include diacetoamide and diacetyl(cyclopentyl)azane.

Triacyl Compound

Examples of the triacyl compound include triacetamide and tribenzamide.

In addition, an oligomer or polymer of the repeating structural unit represented by "n" in the chemical formulae (1) to (3) may be used as the compound having the hetero-functional group. For example, polyesters such as poly-ε-caprolactone and polylactic acid, polyamides such as poly-ε-caprolactam, or polythioesters may be used.

As noted above, the modified EVOH (B1) having the structural unit represented by the chemical formula (1) can be manufactured by: heating and stirring EVOH and the compound having the hetero-functional group in a state of melted EVOH in a stirring-vessel-type manufacturing apparatus having a stirring blade; or melt-kneading EVOH and the compound having the hetero-functional group with an extruder or a shearing-molding processing machine equipped with a returning-type screw.

For example, when the cyclic compound having the hetero-functional group is used as the compound having the hetero-functional group, the modified EVOH (B1) having the structural unit represented by the chemical formula (1) in the main chain can be manufactured by a ring-opening polymerization reaction and a graft reaction of the cyclic compound having the hetero-functional group in the presence of EVOH. Meanwhile, when the carboxylic acid compound is used as the compound having the hetero-functional group, the modified EVOH (B1) having the structural unit represented by the chemical formula (1) in the main chain can be manufactured by a nucleophilic substitution reaction or a dehydration condensation reaction and a graft reaction of the carboxylic acid compound in the presence of EVOH.

Among these, the modified EVOH (B1) is preferably EVOH having an aliphatic polyester unit (aliphatic-polyester-modified EVOH) that is a ring-opened polymer of a lactone ring having 3 to 10 carbon atoms constituting the ring.

In a case of the reaction with the ring-opening polymerization, a conventionally known ring-opening polymerization catalyst is preferably added. Examples of the ring-opening polymerization catalyst include titanium compound and tin compound. Specific examples thereof include: titanium alkoxides, such as tetra-n-butoxytitanium, tetraisobutoxytitanium, and tetraisopropoxytitanium; tin alkoxides, such as dibutyldibutoxytin; and tin ester compounds, such as tin 2-ethylhexanoate and dibutyltin diacetate. Among these, tetra-n-butoxytitanium and tin 2-ethylhexanoate are preferable

in terms of inexpensive and easy availability.

The above reactions can also be performed in a heating and melting state in a kneading apparatus, such as a monoaxial or biaxial extruder, a Banbury mixer, a kneader, and a Brabender.

A reaction time and temperature in the ring-opening polymerization are not particularly limited, and may be appropriately selected. The ring-opening polymerization is performed with stirring at preferably 50 to 250°C for 10 seconds to 24 hours, and more preferably at 150 to 230°C for 50 seconds to 10 hours. An excessively shorter reaction time than the lower limit or an excessively lower reaction temperature than the lower limit tends to cause bleeding out of an unreacted compound form the molded article due to the decreased reaction rate, leading to deterioration of surface appearance. An excessively longer reaction time than the upper limit or an excessively higher reaction temperature than the upper limit tends to cause crosslinking between the modified EVOH to generate appearance failure of the molded article such as fish eye.

In the modified EVOH (B1) obtained as above, a content of the EVOH unit forming the main chain of the modified EVOH (B1) is typically 40 to 99 mass%, preferably 45 to 95 mass%, and particularly preferably 50 to 90 mass%.

A content of the structural unit grafted with the main chain and represented by any one of the chemical formulae (1) to (3) is typically 1 to 60 mass%, preferably 5 to 55 mass%, and particularly preferably 10 to 50 mass%. If the content of the EVOH unit is excessively high, mechanical strength, specifically tensile breakage distortion, is not improved, and compatibility with the ABS resin (A) is deteriorated, leading to tendency of failure to obtain the effect of the present disclosure. Meanwhile, if the content of the EVOH unit is excessively low, adhesiveness tends to become strong to cause blocking of the molded article. The content of the EVOH unit and the content of the structural unit represented by any one of the chemical formulae (1) to (3) in the modified EVOH (B1) can be calculated from the measurement results by $^1$H-NMR.

A number-average molecular weight (in terms of standard polystyrene measured by GPC) of the modified EVOH (B1) is typically 5,000 to 300,000, preferably 10,000 to 200,000, and particularly preferably 10,000 to 100,000. If the number-average molecular weight of the modified EVOH (B) is excessively high, its melting viscosity tends to become excessively high to deteriorate dispersibility in the ABS resin being the main component. Meanwhile, if the number-average molecular weight of the modified EVOH (B1) is excessively low, its melting viscosity tends to become excessively low to cause difficulty in stable melt-molding. The number-average molecular weight of the modified EVOH (B1) can be calculated from measurement results by GPC.

The modification rate of the modified EVOH (B1) is typically 0.1 to 30 mol%, furthermore preferably 1 to 25 mol%, and particularly preferably 5 to 20 mol%. If the modification rate is excessively low, oil resistance as the modifier is deteriorated and compatibility with the ABS resin (A) is deteriorated, and thereby the effect of the present disclosure tends to fail to be obtained. Meanwhile, if the modification rate is excessively high, adhesiveness tends to become high to cause blocking of the molded article. The modification rate can be calculated form measurement results by $^1$H-NMR.

An average value of "n" (that is, an average chain length of the grafted chain) in the chemical formulae (1) to (3) of the modified EVOH (B1) is typically 1 to 15, preferably 1 to 10, and particularly preferably 1 to 8. If the average chain length of the grafted chain is excessively long, adhesiveness tends to become high to cause blocking of the molded article. The average chain length of the grafted chain can be calculated form measurement results by $^1$H-NMR.

Specifically, the modification rate and the average chain length of the grafted chain of the modified EVOH (B1) can be calculated by $^1$H-NMR measurement under the following conditions.

(a) $^1$H-NMR Measurement Conditions

- Internal standard substance: Tetramethylsilane
- Solvent: d6-DMSO
- Concentration of measured polymer: 5 mass% (sample 0.1 g, solvent 2 mL)
- Measurement temperature: 50°C (323 K)
- Irradiation pulse: 45° pulse
- Pulse interval: 10 sec
- Time of integration: 16

(b) Attribution of Resonance Absorption Peak

(I) 0.8 to 0.9 ppm: $-CH_3$ of the modified EVOH terminal
(II) 1.0 to 1.9 ppm: $-CH_2-$ of the modified EVOH main chain; and - $CH_2-$ in the grafted chain adjacent to each other
(III) 2.0 ppm: $-CH_3$ of a remained acetyl group of the modified EVOH
(IV) 2.1 to 2.3 ppm: $-CH_2-$ adjacent to the carboxy group of the grafted chain
(V) 3.3 to 4.0 ppm: -CH- adjacent to -OH of the modified EVOH; and $-CH_2-$ adjacent to -OH of the grafted chain
(VI) 4.0 to 4.7 ppm: -OH of the modified EVOH and the grafted chain; and $-CH_2-$ adjacent to the ester bond of

the grafted chain

(c) Calculation of Modification Rate and Average Chain Length

By using an integrated value of each of the resonance absorption peaks (I) to (VI), the following simultaneous equations (i) to (vi) are formed to calculate an amount of the modification groups C (mol) and the average chain length "n" (mol) of the grafted chain from solutions of the simultaneous equations. Furthermore, the modification rate X (mol%) is calculated from the equation (vii).

$$\text{Equation (i): } 3\times M = [\text{Integrated value of peak (I)}]$$

$$(2\times M)+(2\times A)+(4\times E)+(2\times O)+(6\times n+2)\times C = [\text{Integrated value of peak (II)}] \quad \text{Equation (ii):}$$

$$\text{Equation (iii): } 3\times A = [\text{Integrated value of peak (III)}]$$

$$\text{Equation (iv): } 2\times n\times C = [\text{Integrated value of peak (IV)}]$$

$$\text{Equation (v): } O+(2\times C) = [\text{Integrated value of peak (V)}]$$

$$\text{Equation (vi): } O+(2\times n-1)\times C = [\text{Integrated value of peak (VI)}]$$

$$\text{Equation (vii): } X = C/(M+A+O+C+E)\times 100$$

Here, M, A, O, C, n, E, and X represent the following values.

M: Amount (mol) of terminal methyl groups of the modified EVOH
A: Amount (mol) of acetyl groups of the modified EVOH
O: Amount (mol) of hydroxy groups of the modified EVOH
C: Amount (mol) of modification groups of the modified EVOH
n: Average chain length (numbers) of the grafted chains
E: Amount (mol) of ethylene groups of the modified EVOH
X: Modification rate (mol) of the modified EVOH

A glass transition temperature (Tg) of the modified EVOH (B1) is typically -50 to 60°C, preferably -30 to 45°C, and particularly preferably -10 to 35°C. If the glass transition temperature is excessively low, blocking of the molded article tends to be likely to occur. Meanwhile, if the glass transition temperature is excessively high, the effect of the present disclosure tends to fail to be obtained. The glass transition temperature can be measured by using a differential scanning calorimeter.

Specifically, the measurement can be performed under the following conditions by using a differential scanning calorimeter to calculate the glass transition temperature of the modified EVOH (B1).

(a) Regulation of specimen state: A sample is melted at 230°C for 1 minute, and then cooled to -30°C at a cooling rate of 10°C/min.
(b) Analysis of glass transition temperature: The sample cooled in (a) is heated to 230°C at a temperature-rising rate of 10°C/min.
(c) Calculation of glass transition temperature: From a DSC curve obtained in (b), an intermediate-point temperature of a stepwise changing portion in the glass transition is calculated as the glass transition temperature.

A melt flow rate (MFR) of the modified EVOH (B1) is typically 0.5 to 100 g/10-min, preferably 1 to 50 g/10-min, and particularly preferably 3 to 35 g/10-min. If this MFR is excessively large, the modified EVOH (B1) has excessively low melting viscosity, and may cause difficulty in stable melt-molding. If this MFR is excessively small, the modified EVOH (B1) has excessively high melting viscosity, and tends to decrease dispersibility in the ABS resin (A).
This MFR is an indicator of a polymerization degree of the EVOH to form the main chain of the modified EVOH (B1), and can be regulated with an amount of a polymerization initiator and an amount of a solvent in copolymerizing the monomers.

<Resin Composition>

Next, the resin composition according to the first embodiment of the present disclosure will be described.
The resin composition according to the first embodiment of the present disclosure comprises the ABS resin (A) and the EVOH (B), wherein the EVOH (B) comprises the modified EVOH (B1). The ABS resin (A) is preferably a main component in the resin composition.
A content of the EVOH (B) is not particularly limited, but preferably 1 to 70 parts by mass relative to 100 parts by mass of a total of the ABS resin (A) and the EVOH (B).
Specifically, a lower limit of the content of the EVOH (B) is preferably 1 part by mass, more preferably 5 parts by mass, and further preferably 10 parts by mass. An upper limit of the content of the EVOH (B) is preferably 70 parts by mass, more preferably 60 parts by mass, further preferably 50 parts by mass, particularly preferably 40 parts by mass, and still particularly preferably 20 parts by mass. Particularly, the content of the EVOH (B) is preferably 1 to 70 parts by mass, more preferably 1 to 40 parts by mass, and further preferably 1 to 20 parts by mass.
If the content of the EVOH (B) is higher than the above range, balance of the compatible state between the ABS resin (A) and the EVOH (B) tends to be lost to deteriorate water resistance of the obtained molded article. If the content of the EVOH (B) is excessively low, the effect of modifying the ABS resin (A) tends to fail to be obtained.
The resin composition according to the first embodiment of the present disclosure may contain: a carboxylic-acid-modified polyolefin resin; hydrocarbon resin having a number-average molecular weight of 100 to 3,000 and a softening point of not lower than 60°C and lower than 170°C; another thermoplastic resin; and a compounding agent commonly blended with EVOH, for example, thermal stabilizer, oxidation inhibitor, antistatic, coloring agent, UV absorber, lubricant, plasticizer, light stabilizer, surfactant, antibacterial agent, desiccant, anti-blocking agent, flame retardant, crosslinker, curing agent, foaming agent, crystal nucleating agent, antifogging agent, additive for biodegradation, silane-coupling agent, and oxygen absorber as other components within a range not inhibiting the effect of the present disclosure (for example, typically not more than 30 mass%, preferably not more than 20 mass%, more preferably not more than 10 mass%, and particularly preferably not more than 5 mass% of the resin composition). These compounding agents may be used alone or in combination.
Examples of the thermal stabilizer for a purpose of improving properties such as thermal stability in melt-molding include additives such as: organic acids, such as acetic acid, propionic acid, butyric acid, lauric acid, stearic acid, oleic acid, and behenic acid, or salts thereof such as alkali metal salt (such as sodium and potassium), alkaline earth metal salt (such as calcium and magnesium), and zinc salt; or inorganic acids, such as sulfuric acid, sulfurous acid, carbonic acid, phosphoric acid, and boric acid, or alkali metal salt (such as sodium and potassium), alkaline earth metal salt (such as calcium and magnesium), zinc salt, etc. thereof. Among these, acetic acid, boron compounds including boric acid and a salt thereof, acetate salt, and phosphate salt are preferably used.

<Preparation of Resin Composition>

Next, a method for obtaining the resin composition according to the first embodiment of the present disclosure will be described.
The resin composition according to the first embodiment of the present disclosure can be obtained by preparation of mixing the ABS resin (A), the modified EVOH (B1) as the EVOH (B), and as necessary, optional components to be blended.
The mixing method is not particularly limited, and the components may be directly used with dry-blending. However, commonly used is a method in which the components are mixed by a melt-mixing method, a solution-mixing method, etc., and then the mixture is molded into an easily operating shape such as pellets to prepare the resin composition. In terms of productivity, a melt-mixing method is preferable.
The melt-mixing method may be performed by using a method of dry-blending the components and then melting the mixture for mix, or using a known kneading apparatus such as a kneader-ruder, an extruder, a mixing roller, a Banbury mixer, and a Plastomill, for example. However, a monoaxial or biaxial extruder is industrially preferably used in typical, and as necessary, a vent-sucking apparatus, a gear-pump apparatus, a screen apparatus, etc. are also preferably provided.

A temperature in the melt-kneading is typically within a range of 50 to 250°C, preferably 100 to 240°C, and particularly preferably 150 to 230°C as a set temperature of the extruder and a die. If this temperature is excessively low, the resin becomes un-melted state, and the processing state tends to be unstable. If the temperature is excessively high, the resin composition tends to be thermally deteriorated to deteriorate quality of the obtained molded product.
Examples of a method for adding the additive such as acetic acid, boron compound, acetate salt, and phosphate salt into the resin composition include: (i) a method in which the resin composition is contacted with an aqueous solution of the additive to allow the resin composition to contain the additive, and then the mixture is dried; and (ii) a method in which the resin composition and the additive are collectively mixed and then melt-kneaded with an extruder, etc.
It is acceptable that two or more different modified EVOH (B1) are blended, or the modified EVOH (B1) and the normal EVOH (B) are blended.

<Resin Composition According to Second Embodiment>

The resin composition according to the second embodiment of the present disclosure is a resin composition comprising an ABS resin (A) and an EVOH (B), wherein the resin composition has a mass change rate in an immersion test being not more than a specific level. Thus, the resin composition according to the second embodiment of the present disclosure can improve oil resistance. The resin composition according to the second embodiment of the present disclosure preferably contains the ABS resin (A) and the EVOH (B) as main components.
Details of the ABS resin (A) and the EVOH (B) used in the resin composition according to the second embodiment of the present disclosure are as described above, and the description will be omitted.
In the resin composition according to the second embodiment of the present disclosure, a content of the EVOH (B), other components, a manufacturing method, etc. may be according to the resin composition according to the first embodiment of the present disclosure.
The mass change rate in the immersion test is not more than 0.45%, preferably not more than 0.30%, and particularly preferably not more than 0.20%, and the lower limit is 0%.
The mass change rate in the immersion test can be determined as follows.

Immersion Test

A mass ($W_1$) of a specimen of the resin composition with 80 mm in length × 10 mm in width × 4 mm in thickness is measured; then, the specimen is immersed in a test oil (Daphne Super Gear Oil 150, available from Idemitsu Kosan Co., Ltd.) at 23°C for 168 hours; then the test oil is wiped off; and a mass ($W_2$) of the specimen is measured to determine the mass change rate (%) with the following formula,

$$\text{Mass change rate (\%)} = (W_2 - W_1)/W_1 \times 100.$$

Examples of a method for setting the mass change rate of the resin composition according to the second embodiment of the present disclosure to not more than 0.45% include: a method of using the modified EVOH (B1), described in the resin composition according to the first embodiment of the present disclosure; a method of using an EVOH (B) having a relatively high content of the ethylene structural unit of 35 to 60 mol%; and a method of using the lactones, described in the resin composition according to the first embodiment of the present disclosure. The mass change rate can be set to not more than 0.45% by these methods singly or in combination. Among these, preferable is the method of using the modified EVOH (B1), described in the resin composition according to the first embodiment of the present disclosure.

<Molded Article>

Next, a molded article obtained by using the resin composition according to the first embodiment or second embodiment of the present disclosure; and a molded article formed from a resin composition containing an ABS resin (A) and an EVOH (B), wherein the molded article has a contact angle of less than 85° will be described.
The contact angle of the molded article is less than 85°, preferably not more than 83°, and more preferably not more than 81°. Setting the contact angle of the molded article to be within the above range can yield the molded article having excellent oil resistance. The contact angle of the molded article refers to a contact angle measured by: regulating a moisture of a specimen of the resin composition with 200 mm in length× 20 mm in width × 4 mm in thickness under an environment at 23°C and 50%RH for three days; and then dropping water with 2 μm on the specimen under measurement conditions at 23°C and 50%RH to specify an angle between water and the specimen 120 seconds after the dropping.

Examples of a method for setting the contact angle of the molded article to less than 85° include: a method of using the modified EVOH (B1), described in the resin composition according to the first embodiment of the present disclosure; a method of using an EVOH (B) having a relatively high content of the ethylene structural unit of 35 to 60 mol%; and a method of using the lactones, described in the resin composition according to the first embodiment of the present disclosure. The contact angle can be set to less than 85° by these methods singly or in combination. Among these, preferable is the method of using the modified EVOH (B1), described in the resin composition according to the first embodiment of the present disclosure.

The resin composition is typically provided as the molded article with various shapes imparted by melt-molding, etc. according to purposes, such as film, sheet, container, fiber, rod, or tube. Examples of the use include various use such as packaging material, fiber, commodity, appliance component, automobile component, medical member, and construction and building material.

The molded article obtained by using the resin composition may be not only used as a virgin product but also used by using a crushed material composed of the molded article (such as reuse of a recovered material) to be subjected again to melt-molding. As the melt-molding method, extrusion molding (such as T-die extrusion, inflation extrusion, blow-molding, melt-spinning, and profile extrusion) and injection molding are mainly adopted. A temperature for the melt-molding is typically within a range of 50 to 250°C, preferably 100 to 240°C, and particularly preferably 150 to 230°C. An excessively low temperature for the melt-molding tends to deteriorate melt moldability due to insufficient flowability, and an excessively high temperature for the melt-molding tends to cause appearance failure such as fish-eye and coloring due to thermal deterioration of the resin composition.

When a single-layer film or a sheet is molded by using the resin composition, the thickness is typically 5 to 2,000 μm, preferably 10 to 500 μm, and further preferably 10 to 200 μm, depending on the use.

When the resin composition is molded into a film or a sheet, the resin composition may be used into various molded article as not only a single molded article but also a multilayer structure having at least one layer composed of the resin composition.

Examples of a method for manufacturing the multilayer structure include: a method of melt-extruding a thermoplastic resin onto a film or sheet containing the resin composition; in contrast, a method of melt-extruding the resin composition onto a base material of a thermoplastic resin, etc.; a method of coextruding the resin composition, another thermoplastic resin, etc.; and a method of dry-lamination between a film or sheet containing the resin composition and a film or sheet of another base material by using a known adhesive such as organotitanium compound, isocyanate compound, polyester compound, and polyurethane compound.

Among the above methods, the method of coextruding the resin composition and another thermoplastic resin is preferable because of easy operation management. Examples of the thermoplastic resin, etc. to be a counterpart of the coextrusion include polyolefin resin, polyester resin, polyamide resin, copolymerized polyamide, polystyrene resin, polyvinyl chloride resin, polyvinylidene chloride, acryl resin, vinyl ester resin, polyester elastomer, polyurethane elastomer, chlorinated polyethylene, chlorinated polypropylene, aromatic or aliphatic polyketone, and aliphatic polyalcohol. Among these, polyolefin resin is preferably used in terms of excellent mechanical properties and extrusion processability, and usability for various molding.

The polyolefin resin is not particularly limited, but for example, linear low-density polyethylene (LLDPE), low-density polyethylene (LDPE), very-low-density polyethylene (VLDPE), ethylene-vinyl acetate copolymer (EVA), and ionomer are preferable in terms of excellent bending fatigue resistance, vibration fatigue resistance, etc. of the obtained laminated packaging material.

As for the layered structure for obtaining the multilayer structure using the resin composition, when the layer containing the resin composition is specified as "a" (a1, a2, ...), and another base material, for example, a layer composed of the thermoplastic resin is specified as "b" (b1, b2, ...), not only a bilayer structure of a/b but also any combinations such as b/a/b, a/b/a, a1/a2/b, a/b1/b2, b2/b1/a/b1/b2, b1/b2/a/b3/b4, and a1/b1/a2/b2 may be provided as long as the multilayer structure has a film, sheet, bottle, pipe, or tube shape. As for the molded article having a fiber or filament shape, the resin composition and another base material may be similarly used in combination, and any combinations such as "a" and "b" being bimetal type, core (a) - case (b) type, core (b) - case (a) type, or eccentric core-case type may be provided.

In the multilayer structure, an adhesive resin layer may be provided between each of the layers as necessary. Although it cannot be definitely mentioned because a resin used for the adhesive resin layer differs depending on a type of the resin used as the other layer, which is the above "b", examples of the resin include a carboxylic-acid-containing modified olefin polymer obtained by chemically bonding an unsaturated carboxylic acid or anhydride thereof with an olefin polymer by addition reaction, grafting reaction, etc.

Specific preferable examples thereof include one or a mixture of two or more selected from maleic-anhydride graft-modified polyethylene, maleic-anhydride graft-modified polypropylene, maleic-anhydride graft-modified ethylene-propylene (block or random) copolymer, maleic-anhydride graft-modified ethylene-ethyl acrylate copolymer, and maleic-anhydride graft-modified ethylene-vinyl acetate copolymer. In this case, an amount of the unsaturated carboxylic acid

or an anhydride thereof contained in the olefin polymer is preferably 0.001 to 3 mass%, further preferably 0.01 to 1 mass%, and particularly preferably 0.03 to 0.5 mass%. A low modification amount in the modified product tends to cause insufficient adhesiveness, and meanwhile, a high modification amount tends to cause a crosslinking reaction to deteriorate moldability.

With these adhesive resins, the resin composition, another EVOH, polyisobutylene, rubber-elastomer component such as ethylene-propylene rubber, a resin of the "b" layer (the counter layer to be adhered), etc. may be blended. Specifically, a polyolefin resin that differs from the polyolefin resin of the mother material of the adhesive resin may also be blended.

Although it cannot be definitely mentioned because a thickness of each layer in the multilayer structure depends on the layer configuration, the type of "b", the use, the shape of the molded article, required properties, etc., the thickness of the "a" layer is preferably selected from ranges of typically 5 to 2,000 μm, further 10 to 500 μm, and particularly 10 to 200 μm. The thickness of the "b" layer is preferably selected from ranges of 5 to 5,000 μm and further 30 to 1,000 μm, and the thickness of the adhesive resin layer is preferably selected from ranges of 5 to 400 μm and further approximately 10 to 150 μm. As for a thickness ratio between the "a" layer and the adhesive resin layer, the "a" layer is typically thicker than the adhesive resin layer, and the ratio of the "a" layer / the adhesive resin layer (thickness ratio) is typically 1 to 100, preferably 1 to 50, and particularly preferably 1 to 10.

As for a thickness ratio between the "a" layer and the "b" layer in the multilayer structure, in a state where a same type of all layers in the multilayer structure are summed, the "b" layer is typically thicker than the "a" layer, and the ratio of "b" layer / "a" layer (thickness ratio) is typically 1 to 100, preferably 3 to 20, and particularly preferably 6 to 15. If the "a" layer is excessively thin, mechanical properties such as rigidity and impact resistance tend to be insufficient, and the thickness control tends to be unstable. In contrast, if the "a" layer is excessively thick, bending fatigue resistance tends to be deteriorated, and tends not to be economical. If the "b" layer is excessively thin, rigidity tends to be insufficient, and in contrast, the "b" layer is excessively thick, bending fatigue resistance tends to be poor, and the mass tends to be large. Meanwhile, if the adhesive resin layer is excessively thin, interlayer adhesiveness tends to be insufficient, and the thickness control tends to be unstable. In contrast, if the adhesive resin layer is excessively thick, the mass tends to be large, and tends not to be economical. Into each layer in the multilayer structure, the aforementioned additives, modifier, filler, and other resins may be added in addition to the EVOH (B) used in the resin composition for improving molding processability and properties within a range not inhibiting the effect of the present disclosure.

Furthermore, to improve the properties of the multilayer structure, a stretching treatment is preferably performed. The stretching treatment may be any of monoaxial stretching and biaxial stretching. Stretching with as the highest possible starching ratio is good for the properties, and the molded article of a stretched film, stretched sheet, stretched container, stretched bottle, etc. can be obtained without pinholes, cracking, stretching unevenness, delamination, etc. during the stretching. As the stretching method, a roller stretching method, a tenter stretching method, a tubular stretching method, and a stretching-blowing method, and in addition, deep-drawing molding, vacuum or pressure molding, etc. that yield high starching ratio may be adopted. For the biaxial stretching, any of simultaneous biaxial stretching method and a stepwise biaxial stretching method may be adopted. The stretching temperature is selected from ranges of typically 40 to 170°C, and preferably approximately 60 to 160°C. A stretching temperature of lower than 60°C tends to cause stretching failure, and a stretching temperature of higher than 170°C tends to cause difficulty in keeping the stable stretching state.

After the stretching is finished, thermal fixing is preferably performed for a purpose of imparting size stability to the stretched film. The thermal fixing can be performed by known methods. While keeping the tense state, the stretched film is subjected to the thermal treatment at, for example, typically 80 to 180°C, preferably 100 to 165°C for typically 2 to 600 seconds. When the film is used for a thermal shrinkage packaging of raw meat, processed meat, cheese, etc., the thermal fixing after the stretching is not performed to use as a product film, and after the raw meat, processed meat, cheese, etc. is housed in the film, the thermal treatment is performed at typically 50 to 130°C, preferably 70 to 120°C for typically approximately 2 to 300 seconds and the film is thermally shrunk to perform adhesive packaging.

The multilayer structure may be used for various shapes as it is, and examples thereof include film, sheet, tape, bottle, pipe, filament, and profile-sectional extruded product. When a multilayer container such as a cap or a tray is obtained from the multilayer sheet or the multilayer film, drawing molding is adopted. Specific examples thereof include a vacuum molding method, a pressure molding method, a vacuum-pressure molding method, and a plug-assisted vacuum-pressure molding method. When the tube or bottle multilayer container is obtained from a multilayer parison (a preliminary molded article having a hollow tube shape before blowing), blowing-molding is adopted. Specific examples thereof include extruding blow-molding (such as double-head type, mold-movable type, parison-shifting type, rotary type, accumulator type, and horizontal parison type), cold parison-type blow-molding method, injection blow-molding method, biaxial stretching blow-molding method (such as extrusion-type cold parison biaxial stretching blow-molding method, injection cold parison biaxial stretching blow-molding method, and injection-molding inline-type biaxial stretching blow-molding method). The obtained multilayer structure may be subjected to thermal treatment, cooling treatment, rolling treatment, printing treatment, dry laminating treatment, solution- or melt-coating treatment, bag-manufacturing process,

deep profile processing, box processing, tube processing, split processing, etc. as necessary.

<Modifier for ABS Resin and Method for Modifying ABS Resin>

A modifier for an ABS resin of the present disclosure comprises the modified EVOH (B1). That is, the modified EVOH (B1) itself, which is used in the above resin composition, is used as a modifier for the ABS resin (A). This modifier can improve oil resistance of the ABS resin (A).

Details of the ABS resin (A) and the modified EVOH (B1) are as described above, and the description will be omitted.

As the method for modifying the ABS resin (A), the modified EVOH (B1) is added into the ABS resin (A).

EXAMPLES

Hereinafter, the present disclosure will be more specifically described with Examples, but the present disclosure is not limited to the following Examples without departing from the spirit. In examples, "parts" and "%" mean mass base unless otherwise mentioned.

<Materials>

First, details of materials used in Examples and Comparative Examples will be described below.

- (A) ABS resin (product name: toyolac 600-309, available from Toray Industries, Inc.)
- (B1-1) Modified EVOH in which an aliphatic polyester unit derived from ring-opening polymerization of ε-caprolactone is bonded to a side chain (modified EVOH having the structural unit represented by the chemical formula (1)): ethylene content 44 mol%, saponification degree 99.7%, modification rate 7.2 mol%, average chain length of the grafted chain (aliphatic polyester unit) 1.4, grass transition temperature 23°C, MFR 12 g/10-min (210°C, 2.16 kg)
- (B1-2) Modified EVOH in which an aliphatic polyester unit derived from ring-opening polymerization of ε-caprolactone is bonded to a side chain (modified EVOH having the structural unit represented by the chemical formula (1)): ethylene content 32 mol%, saponification degree 99.7%, modification rate 7.0 mol%, average chain length of the grafted chain (aliphatic polyester unit) 1.4, grass transition temperature 30°C, MFR 12 g/10-min (210°C, 2.16 kg)
- (B) Unmodified EVOH: ethylene content 32 mol%, saponification degree 99.7%, grass transition temperature 61°C, MFR 12 g/10-min (210°C, 2.16 kg)

<Example 1>

The material (A) and the material (B1-1) were fed into a biaxial kneading extruder (TEX30α, available from The Japan Steel Works, Ltd.), and each resin was conveyed and melt-kneaded to obtain a resin composition composed of 99% of the material (A) and 1% of the material (B1).

<Examples 2 to 6 and Comparative Examples 1 to 2>

Resin compositions were produced in the same manner as in Example 1 except that the type and amount of each component were changed as shown in Table 1.

The following evaluation items (mass change rate, strength change, and contact angle) in Examples 1 to 6 and Comparative Example 1 to 2 were measured and evaluated. The following Table 1 shows these results.

Mass Change Rate

The resin composition produced in each of Examples and Comparative Examples was molded with an injection tester to prepare a specimen with 80 mm in length × 10 mm in width × 4 mm in thickness. This specimen was immersed in a test oil (Daphne Super Gear Oil 150, available from Idemitsu Kosan Co., Ltd.) at 23°C for 168 hours (the immersion test conditions were in accordance with JIS K7114).

A mass ($W_1$) before the immersion test and a mass ($W_2$) after the immersion test and removal of oil were each measured by using a precise balance to calculate a mass change rate of the specimen before and after the immersion test. The mass change rate was calculated with the following formula,

$$\text{Mass change rate (\%)} = (W_2 - W_1)/W_1 \times 100.$$

Strength Change

The specimen before the immersion test and the specimen after the immersion test were each subjected to a tensile test by using a tensile tester (desktop precise multipurpose tester AGS-X, available from SHIMADZU CORPORATION), and strength change was calculated from a tensile strength ($TS_1$) before the immersion test and a tensile strength ($TS_2$) after the immersion test (the tensile measurement conditions were in accordance with JIS K6251). The strength change was calculated with the following formula,

$$\text{Strength change (\%)} = (TS_2\text{-}TS_1)/TS_1 \times 100.$$

Contact Angle

The resin composition produced in each of Examples and Comparative Examples was molded with an injection tester to prepare a specimen with 200 mm in length × 20 mm in width × 4 mm in thickness. A moisture of this specimen was regulated under an environment at 23°C and 50%RH for three days. Thereafter, by using a surface/interface tension measurement apparatus (available from Kyowa Interface Science Co., Ltd.), water with 2 μm was dropped on the specimen moisture-modified under an environment at 23°C and 50%RH to specify data after 120 seconds as the contact angle.

[Table 1]

| | ABS resin (A) | EVOH (B) | | Evaluation items | | |
|---|---|---|---|---|---|---|
| | Blend amount (parts by mass) | Type | Blend amount (parts by mass) | Mass change rate (%) | Strength change (%) | Contact angle (°) |
| Example 1 | 99 | B1-1 | 1 | 0.23 | +11 | - |
| Example 2 | 95 | B1-1 | 5 | 0.10 | +13 | - |
| Example 3 | 90 | B1-1 | 10 | 0.14 | +12 | 80.6 |
| Example 4 | 80 | B1-1 | 20 | 0.04 | +7 | 80.8 |
| Example 5 | 60 | B1-1 | 40 | 0.07 | +2 | 78 |
| Example 6 | 95 | B1-2 | 5 | 0.26 | +4 | - |
| Comparative Example 1 | 100 | - | 0 | 0.58 | -5 | 85.6 |
| Comparative Example 2 | 95 | B | 5 | 0.49 | +8 | - |

From the above results, it is found that Examples 1 to 6 exhibit a small mass change rate and excellent oil resistance compared with Comparative Example 1, which does not contain the modified EVOH (B1). Furthermore, with comparing Examples 1 to 4 and 6 and Example 5, it is found that the content of the modified EVOH (B1) of not more than 40 mass% improves the strength change in addition to oil resistance, and exhibits more excellent modification effect. From Comparative Example 2, it is found that the effect of the present disclosure cannot be obtained by the unmodified EVOH (B), and the effect is unique by the modified EVOH (B1).

The specific embodiments in the present disclosure have been described with Examples, but the Examples are merely examples, and should not be limitingly interpreted. It is intended that various modifications obvious for a person skilled in the art are all included in the scope of the present disclosure.

INDUSTRIAL APPLICABILITY

The molded article obtained from the resin composition of the present disclosure has excellent oil resistance, and therefore the molded article can be widely used.

## Claims

**1.** A resin composition, comprising:

an ABS resin (A); and
an ethylene-vinyl alcohol resin (B),
wherein the ethylene-vinyl alcohol resin (B) comprises a modified ethylene-vinyl alcohol resin (B1) having a structural unit represented by the following chemical formula (1),

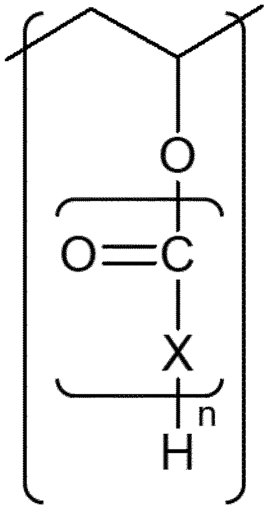
...(1)

wherein X represents an organic chain having a heteroatom; and n represents a positive integer.

**2.** A resin composition, comprising:

an ABS resin (A); and
an ethylene-vinyl alcohol resin (B),
wherein the resin composition has a mass change rate in of not more than 0.45% in an immersion test conducted as follows:
a mass ($W_1$) of a specimen of the resin composition that is 80 mm in length by 10 mm in width by 4 mm in thickness is measured; then, the specimen is immersed in a test oil that is Daphne Super Gear Oil 150 at 23°C for 168 hours; then, the test oil is wiped off; and a mass ($W_2$) of the specimen is measured to determine the mass change rate (%) with the following formula:

$$\text{Mass change rate (\%)} = (W_2-W_1)/W_1 \times 100.$$

**3.** The resin composition according to claim 1 or 2, wherein the ethylene-vinyl alcohol resin (B) is contained by 1 to 70 parts by mass relative to 100 parts by mass of a total of the ABS resin (A) and the ethylene-vinyl alcohol resin (B).

**4.** The resin composition according to claim 1 or 2, wherein the ethylene-vinyl alcohol resin (B) is contained by 1 to 40 parts by mass relative to 100 parts by mass of a total of the ABS resin (A) and the ethylene-vinyl alcohol resin (B).

**5.** The resin composition according to any one of claims 1, 3, and 4, wherein the modified ethylene-vinyl alcohol resin (B1) having the structural unit represented by the chemical formula (1) has a modification rate of 0.1 to 30 mol%.

**6.** The resin composition according to any one of claims 1 and 3 to 5, wherein the modified ethylene-vinyl alcohol resin (B1) having the structural unit represented by the chemical formula (1) is a ring-opened polymer of a lactone ring having 3 to 10 carbon atoms constituting the ring.

**7.** A molded article, formed with the resin composition according to any one of claims 1 to 6.

**8.** The molded article according to claim 7, wherein the molded article is a sheet or a film.

**9.** A modifier for an ABS resin, the modifier comprising a modified ethylene-vinyl alcohol resin (B1) having a structural unit represented by the following chemical formula (1),

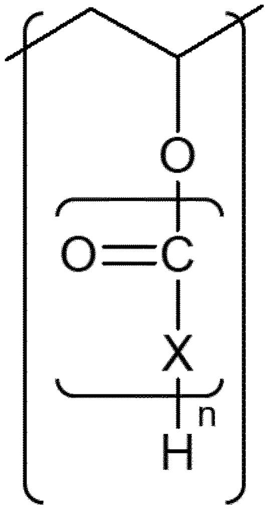

...(1)

wherein X represents an organic chain having a heteroatom; and n represents a positive integer.

**10.** A method for manufacturing a resin composition, the method comprising blending a modified ethylene-vinyl alcohol resin (B1) having a structural unit represented by the following chemical formula (1) with an ABS resin (A),

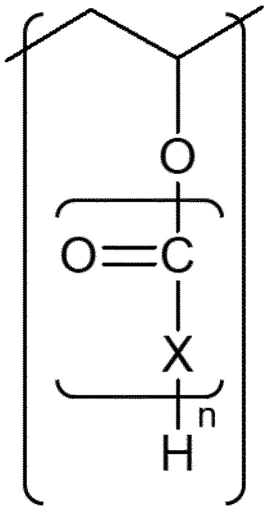

...(1)

wherein X represents an organic chain having a heteroatom; and n represents a positive integer.

**11.** A method for modifying an ABS resin, the method comprising blending a modified ethylene-vinyl alcohol resin (B1) having a structural unit represented by the following chemical formula (1) with an ABS resin (A),

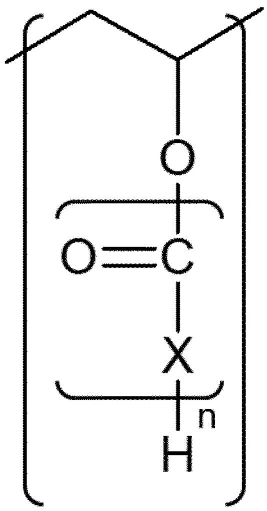

…(1)

wherein X represents an organic chain having a heteroatom; and n represents a positive integer.

**12.** A molded article formed from a resin composition comprising: an ABS resin (A); and an ethylene-vinyl alcohol resin (B), wherein the molded article has a contact angle of less than 85°.

## INTERNATIONAL SEARCH REPORT

International application No.
**PCT/JP2022/036215**

**A. CLASSIFICATION OF SUBJECT MATTER**

***C08L 55/02***(2006.01)i; ***C08G 81/02***(2006.01)i; ***C08L 29/04***(2006.01)i
FI: C08L55/02; C08L29/04 S; C08G81/02

According to International Patent Classification (IPC) or to both national classification and IPC

**B. FIELDS SEARCHED**

Minimum documentation searched (classification system followed by classification symbols)

C08L1/00-101/14, C08K3/00-13/08, C08G81/00-85/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 8-120183 A (DAICEL CHEM. IND., LTD.) 14 May 1996 (1996-05-14)<br>claims, paragraphs [0001], [0021], examples | 1-12 |
| Y | JP 2019-163379 A (MITSUBISHI CHEMICAL HOLDINGS CORP.) 26 September 2019 (2019-09-26)<br>claims, paragraphs [0035], [0042]-[0046], examples | 1-12 |
| Y | JP 2013-209588 A (THE NIPPON SYNTHETIC CHEM. IND. CO., LTD.) 10 October 2013 (2013-10-10)<br>claims, paragraphs [0023], [0024], [0028], examples | 1-12 |
| Y | JP 2007-277780 A (THE NIPPON SYNTHETIC CHEM. IND. CO., LTD.) 25 October 2007 (2007-10-25)<br>claims, paragraphs [0024], [0025], examples | 1-12 |
| A | JP 9-208638 A (DAINICHISEIKA COLOR & CHEM. MFG. CO., LTD.) 12 August 1997 (1997-08-12)<br>entire text | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2022/036215**

**C. DOCUMENTS CONSIDERED TO BE RELEVANT**

| Category* | Citation of document, with indication, where appropriate, of the relevant passages | Relevant to claim No. |
|---|---|---|
| A | JP 10-195270 A (KURARAY CO., LTD.) 28 July 1998 (1998-07-28)<br>entire text | 1-12 |
| A | JP 2005-29727 A (KURARAY CO., LTD.) 03 February 2005 (2005-02-03)<br>entire text | 1-12 |
| A | JP 3-277642 A (KURARAY CO., LTD.) 09 December 1991 (1991-12-09)<br>entire text | 1-12 |
| P, A | WO 2021/192987 A1 (MITSUBISHI CHEMICAL HOLDINGS CORP.) 30 September 2021 (2021-09-30)<br>entire text | 1-12 |
| P, A | WO 2022/045208 A1 (MITSUBISHI CHEMICAL HOLDINGS CORP.) 03 March 2022 (2022-03-03)<br>entire text | 1-12 |

Form PCT/ISA/210 (second sheet) (January 2015)

**INTERNATIONAL SEARCH REPORT**
**Information on patent family members**

International application No.
**PCT/JP2022/036215**

| Patent document cited in search report | Publication date (day/month/year) | Patent family member(s) | Publication date (day/month/year) |
|---|---|---|---|
| JP 8-120183 A | 14 May 1996 | US 5612412 A<br>claims, column 1, lines 25-37, column 14, lines 44-52, examples<br>US 5712334 A<br>EP 704470 A2 | |
| JP 2019-163379 A | 26 September 2019 | (Family: none) | |
| JP 2013-209588 A | 10 October 2013 | (Family: none) | |
| JP 2007-277780 A | 25 October 2007 | (Family: none) | |
| JP 9-208638 A | 12 August 1997 | EP 787755 A2<br>entire text | |
| JP 10-195270 A | 28 July 1998 | US 6410109 B1<br>entire text<br>US 2002/0155238 A1<br>EP 853096 A1<br>EP 1197520 A1<br>CA 2226459 A1 | |
| JP 2005-29727 A | 03 February 2005 | US 2004/0204530 A1<br>entire text<br>EP 1431342 A2<br>TW 200415195 A<br>KR 10-2004-0051558 A<br>CN 1536019 A<br>CA 2452218 A1 | |
| JP 3-277642 A | 09 December 1991 | (Family: none) | |
| WO 2021/192987 A1 | 30 September 2021 | (Family: none) | |
| WO 2022/045208 A1 | 03 March 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015196809 A